# EUROPEAN PATENT SPECIFICATION

(11) **EP 1 325 621 B1**
(45) Date of publication and mention of the grant of the patent: **18.08.2004**
(21) Application number: 01966926.6
(22) Date of filing: 12.09.2001
(51) Int. Cl.: H04M 17/00, H04Q 7/00

(54) **ROAMING RELOAD MANAGER**
ROAMINGNACHLADENMANAGER
GESTIONNAIRE DE RECHARGEMENT A ITINERANCE

(43) Date of publication of application: 09.07.2003
(73) Proprietor: Sicap AG, 3098 Köniz (CH)
(72) Inventor: GRANATH, Nils, CH-3014 Bern (CH)
(74) Representative: BOVARD AG - Patentanwälte
(86) International application number: PCT/CH2001/000550
(87) International publication number: WO 2003/019926

(56) References cited:
- EP-A- 0 848 537
- WO-A-00/52921
- WO-A-01/24121
- WO-A-01/35628

## Description

This invention relates to a method and system for loading or reloading chipcards, used in mobile radio devices, or for loading or reloading user accounts assigned to the chipcards with a credit for a monetary amount value, in which method and system a reloading unit transmits the credit to the chipcard assigned to a call number of a user of the mobile radio network, a service number of a central unit being called with a communications device, and, by means of the communications device, at least a code of a prepaid value card and an identification of the chipcard or the user account to be loaded or reloaded being transmitted. In particular, the invention relates to a method and a system in which a MSISDN assigned to the chipcard is used as identification.

The loading or reloading of prepaid credits onto chipcards (such as e.g. smart cards or SIM cards) is generally known. Described in the patent publication EP 0 827 119 A1 is a method for loading or reloading a chipcard with a monetary amount value. According to the method described in EP 0 827 119 A1, the sale value of a value card available at a great many public points of sale is loaded or reloaded on a particular chipcard, in particular a SIM (Subscriber Identification Module) card after a value code, located on this value card, has been transmitted to a service center. Such cards are also known as so-called prepaid cards. An alternative method for loading of telephone cards for mobile radio telephones with a value card is described in the patent publication EP 0 848 537 A1. According to the method described in EP 0 848 537 A1, the sale of a telephone card, in particular a SIM card, is registered in a customer database, and the prepaid telephone card is only activated after the user enters a secret number, defined by him, upon making the first telephone call. The credit amount is not stored on the card, but rather in a user account. To reload the card credit, the user calls a service number and enters, in addition to the secret number, a credit card number or a value code of a value card, whereupon the user account is increased by a reload amount. Value cards with value codes loaded thereon, as are described in the patent publication EP 0 827 119 A1, can be used in countless areas of application since the value cards with the stored value codes can be used not only for loading telephone cards or other chipcards with monetary amount values, but can also be used to obtain credit for all sorts of services that must be paid for. Such prepaid cards with value codes in the state of the art can usually be purchased at all sorts of final points of sale such as, for instance, kiosks or other points of sale. Value codes without value cards or value cards with value codes can also be obtained at ATMs (automated teller machines) or POS (point of sale) terminals, which carry out the debiting and crediting via a bank account of the user, credit cards or prepaid cards (e.g. smart cards).

However, the distribution of value codes by means of a value card as carrier has the drawback that the value codes are usually tied to a particular provider or mobile radio network operator. If a user of a mobile radio device is in another country, for example, and, using a prepaid value card originating there, would like to load or reload credit on his chipcard, this would not be possible. The service center of the mobile radio network operator, with whom the user is a subscriber, does not accept the value code of the foreign mobile radio network operator, and the service center of the foreign mobile radio network operator who issued the value card does not have permission to load or reload the chipcard of the mobile radio device. One possibility would be to allow this through special agreements between the individual mobile radio network operators. Owing to the large and constantly growing number of mobile radio network operators worldwide, however, concluding agreements with each possible mobile radio network operator not only represents a very extensive undertaking, it would also be hardly bearable financially or from the viewpoint of time involved. Such additional costs could hardly be borne by the customers since otherwise the value cards would lose their attractiveness among customers. The production and operating costs for the value cards are typically borne by the service provider, for example the operator of a telecommunications network. The customers expect to receive services corresponding to the monetary value of the value card.

Finally the international patent application WO 01/35628 A1 shows a method for adding monetary value of mobile prepayment service in different locations by an intelligent network. In the method, a Service Control Point (SCP) by means of Service Discovery Protocol (SDP) in a Signalling System 7 (SS7) network memorizes all data of monetary value added cards of mobile prepayment service. When a user of the mobile prepayment service dials the monetary value added service access number to perform monetary value added operation, the call is accessed to a Service Switching Point (SSP). The SSP analyses the calling number of the call, determines its home SCP, and triggers an intelligent call to its home SCP. The entire monetary value added process is controlled by the home SCP, and by the interactive process between the home SCP and said SDP, the user data and the status of monetary value added card are modified.

It is the object of this invention to propose a new method and system for loading or reloading chipcards, used in mobile radio devices, or user accounts assigned to the chipcard with a credit for a monetary amount value, which do not have the drawbacks described above. Such a method and a system are claimed respectively in claims 1 and 10. In particular, the users should have the possibility of being able to buy any value cards with value codes of any desired mobile radio network operators and of being able to use them for loading or reloading the chipcard without having to pay attention to whether the value card comes from the mobile radio network operator through whom the chipcard was approved for network access.

According to the invention, these objects are achieved in particular through the elements of the independent claims. Further preferred embodiments follow moreover from the dependent claims and from the description.

In particular, these objects are achieved through the invention in that for loading or reloading chipcards, used in mobile radio devices, or user accounts assigned to the chipcards with a credit for a monetary amount value, a service number of a central unit is called using a communications device, by means of the communications device at least a value code of a prepaid value card and an identification of the chipcard or the user account to be loaded or reloaded is transmitted, and a reloading unit transmits the credit to the chipcard or to the user account assigned to the chipcard and stored on a central customer database, whereas the chipcard is assigned to a call number of a user of the mobile radio network, whereby the central unit determines, by means of a database, a first reloading unit of a first mobile radio network operator, the issuer of the prepaid value card, the central unit transmits, via a first communications channel, the value code and a proxy MSISDN to the first reloading unit, and the first reloading unit credits a monetary amount value, which is assigned to the value code, to the central unit by means of the proxy MSISDN, and the central unit transmits, via a second communications channel, the monetary amount value and the identification of the chipcard or the user account to be loaded or reloaded to a second reloading unit of a second mobile radio network operator, with whom the chipcard is approved for use of the mobile radio network, for loading or reloading the chipcard or the user account. Used as identification of the chipcard or the user account can be a MSISDN (Mobile Subscriber ISDN) assigned to the chipcard, i.e. the call number, and/or an IMSI (International Mobile Subscriber Identification). The chipcards can be, e.g. SIM (Subscriber Identification Module) cards or smart cards. An advantage of the invention is, inter alia, that no special contractual agreements between the individual mobile radio network operators are necessary for mutual recognition of value cards with value codes from different mobile radio network operators. On the contrary, a single contractual agreement with a central unit according to the invention or the operator thereof suffices for a mobile radio network operator, if the central unit does not in fact already belong to the mobile radio network operator. Another advantage is that the mobile radio network user does not have to worry about where, or from which operator, he buys a value card with corresponding value code for loading or reloading his chipcard. The user likewise does not have to be concerned about to which reloading unit the value card has been assigned. For all the value codes of any desired operator, the user always has the same central unit or service center to call to load or reload his chipcard or user account.

In another embodiment variant the central unit converts the monetary amount value into the home currency of the second mobile radio network operator before it transmits the monetary amount value with the identification of the chipcard or the user account to the reloading unit of the home mobile radio network operator (i.e. of the mobile radio network operator with whom the chipcard was approved for use of the mobile radio network). This embodiment variant has the advantage, inter alia, that no further conversions are necessary at the second reloading unit.

In an embodiment variant, the second reloading unit also sends the monetary amount value to a transfer account of the central unit. This embodiment variant has the advantage, among other things, that the transactions of the monetary amounts can be centrally recorded and monitored.

In a further embodiment variant, the central unit determines the first reloading unit of the first mobile radio network operator based on the value code by means of the database. This embodiment variant has the advantage, inter alia, that no further identification has to be transmitted to the central unit from the user for recognition of the first mobile radio network operator or respectively of the first reloading unit.

In another embodiment variant, the central unit determines the first reload unit of the first mobile radio network operator based on an identification number, entered by the user of the chipcard, by means of the database. This embodiment variant has the advantage, among other things, that the handling by the central unit of the various value codes can be simplified.

In still another embodiment variant, the chipcards are removably connected to the mobile radio device via an interface having contacts. The chipcard can be, for instance, a SIM card (Subscriber Identification Module) or a smart card. This embodiment variant has the advantage, inter alia, that it is based on what is already particularly widespread in Europe.

In a further embodiment variant, the chipcards are integrated as fixed component into the mobile radio device. This embodiment variant has the same advantages as the one just mentioned above since it is based on what is common above all in the United States.

Embodiment variants of the present invention will be described in the following with reference to examples. The examples of the embodiments are illustrated by the following attached figures:

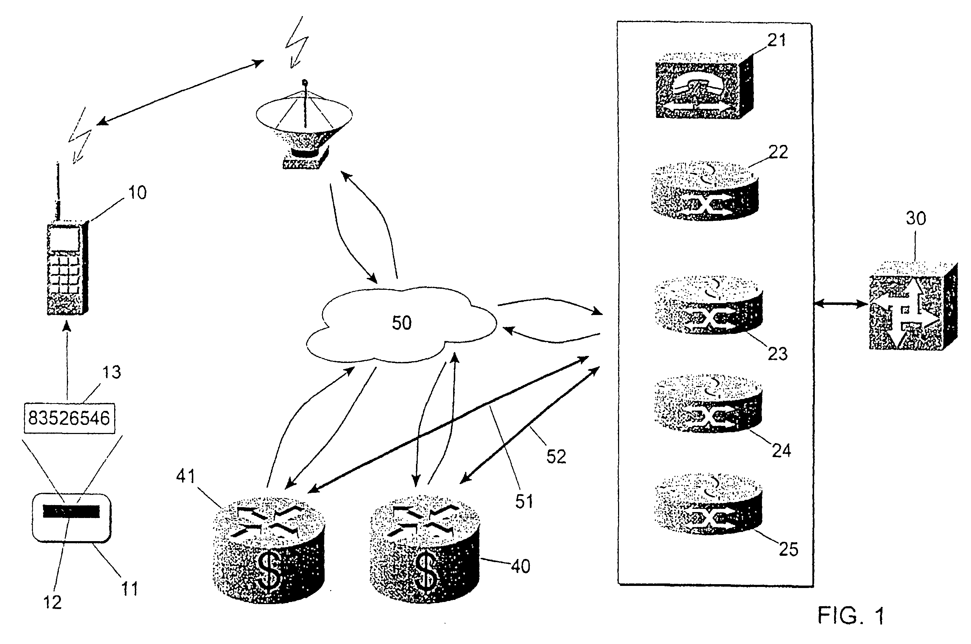

Figure 1 shows a block diagram which illustrates schematically the architecture of an embodiment variant of the system according to the invention for loading or reloading chipcards, used in mobile radio devices 10, or user accounts assigned to the chipcards with a credit for a monetary amount value, in which system a central unit 30 has the monetary amount value, which is assigned to the value code 13, credited at a first reloading unit 41 of a first mobile network operator, by means of a value code 13 and a proxy MSISDN, and, via a second reloading unit 40 of a second mobile radio network operator, loads or reloads the chipcard or the user account.

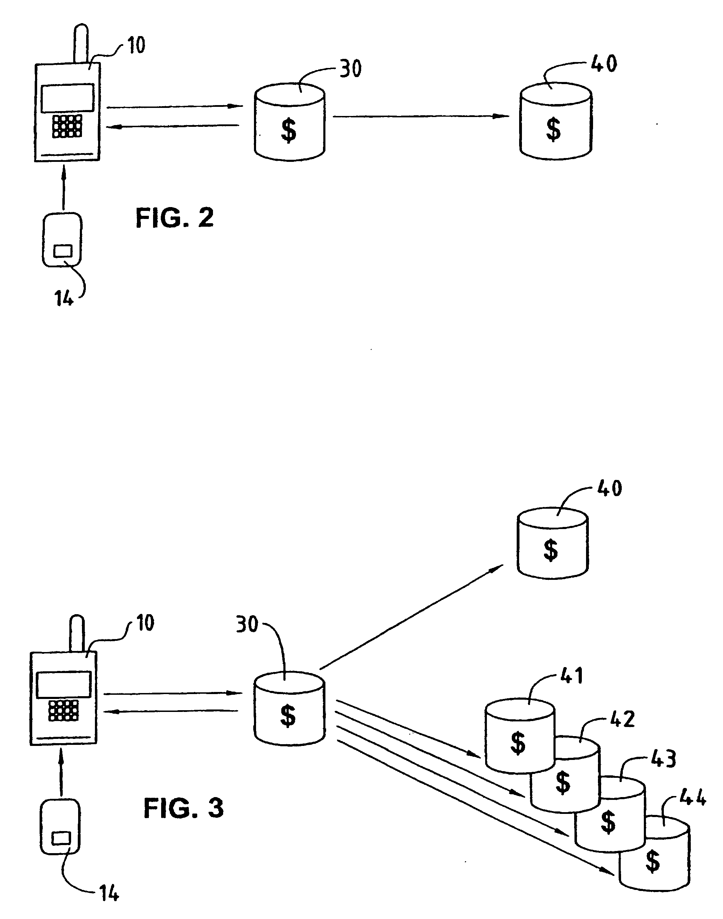

Figure 2 and Figure 3 each show a block diagram which illustrates schematically the architecture of a system for loading or reloading chipcards, used in mobile radio devices, or user accounts assigned to the chipcards with a credit for a monetary amount value as is used in the state of the art.

Figure 1 illustrates an architecture which can be used to achieve the invention. In this embodiment example, for loading or reloading chipcards, used in mobile radio devices 10, or user accounts assigned to the chipcards with a credit for a monetary amount value, a service number of a central unit 30 is called using a communications device, and at least a value code 13 of a prepaid value card 11 and an identification of the chipcard or the user account to be loaded or reloaded are transmitted by means of the communications device to the central unit 30. The loading or reloading of the chipcard or the user account assigned to the chipcard can be done via a mobile radio network 50 or another connection. The value code and/or the identification can be entered by a user, e.g. by means of input elements of the communications device, and/or transmitted by means of an IVR (Interactive Voice Response) module 21 to the central unit 30. Another possibility is that a SMS (Short Message Service) and/or USSD (Unstructured Supplementary Service Data) interface 24 and/or an ATM (Asynchronous Transfer Mode) module 23 or/and a TCP/IP interface 22 or/and a Corba (Common Object Request Broker Architecture) interface 25 are made available to the user for transmission. In connection with the loading or reloading of chipcards or user accounts by means of credit cards, the transmission via automated teller machines or point of sale terminals can be suitable. Used as communications device can be, e.g. the mobile radio device 10 in which the chipcard is inserted. The identification does not necessarily have to be entered by the user, but can, for instance, be automatically recognized with a CLI (Calling Line Identification) module by means of calling line identification of the assigned MSISDN. For the value code 13, the value card 11 can have an area with a field 12, for example, that contains a value code and that is covered over by an opaque layer when the card is purchased that can be removed or scratched off, for instance. The complete covering of the field 12 is a guarantee that the purchased value card is really new and still unused. The chipcards can be e.g. SIM (Subscriber Identification Module) cards or smart cards, a call number always being assigned to the chipcards. The assignment of the chipcard to a number can take place, for instance, via a HLR (Home Location Register) in that the IMSI (International Mobile Subscriber Identification) of a call number e.g. a MSISDN (Mobile Subscriber ISDN) is stored in the HLR in an assigned way. The chipcard can be removably connected to the mobile radio device 10 via an interface having contacts, as is usual in Europe, or can be integrated as fixed component in the mobile radio device 10, as is more common in the USA. Used as identification can be e.g. the MSISDN, the IMSI or another identification number (ID). In the case where the call number of the chipcard has not been used at the same time as identification, an unambiguous link of the call number with the identification exists in the central unit 30.

The prepaid value card 11 can be acquired through purchase at ticket machines of a public transportation company, at terminals accessible to the public of a telecommunications company, at ATMs (Automated Teller Machines) such as automated banking installations or POS (Point of Sale) terminals and/or at public sales points provided for the purpose, such as kiosks, tobacco shops, etc. Value codes 13 without value cards 11, however, can also be obtained, for example, at automated teller machines or point of sale terminals that carry out the debiting and crediting via a bank account of the user, credit cards or prepaid cards (e.g. smart cards), i.e. the payment can be made in the latter case in such a way that the user deposits a sum of money into the ATM or POS and/or a monetary amount is charged to the user via a credit card and/or a monetary amount is charged to the user on a chipcard with stored prepaid monetary amount (prepaid card) and/or a monetary amount is charged to the user on a centrally stored account (e.g. a bank account or a postal checking account). The charging on a credit card can take place, for instance, in that the user inserts the credit card into the terminal and enters a PIN (Personal Identification Number) code for identification or in that he enters name, credit card number and possibly also the expiration date of the credit card, such as is customary e.g. for purchase of goods via Internet.

Through transmission of information, which information includes, as already mentioned, at least a value code 13 of a prepaid value card 11 and an identification of the chipcard or the user account to be loaded or reloaded, using a communications device to a central unit 30, a credit is assigned in the central unit 30 to the user of the mobile radio network 50 and is stored. The data transfer is initiated and carried out e.g. via a transfer module, implemented through software or hardware, of the communications device. By means of a database, the central unit 30 determines a first reloading unit 41 of a first mobile radio network operator. The first mobile radio network operator corresponds to that mobile radio network operator who has issued the prepaid value card. To determine the first reloading unit 41, the central unit 30 can use e.g. the value code 13 or a supplementary identification number or code, entered by the user using the communications device, assigned in the database to the first mobile radio network operator. The said database of the central unit 30 includes at least one list with the possible mobile radio network operators or respectively their reloading units 41 for possible entered value codes 13. The central unit 30 further transmits, over a first communications channel 50/51, the value code 13 and a proxy MSISON to the first reloading unit 41. By means of the proxy MSISDN, the first reloading unit 41 credits a monetary amount value that is assigned to the value code 13 to the central unit 30. For the transaction, the first reloading unit 41 can credit the monetary amount value e.g. on a transfer account of the central unit 30 at a monetary institution. The proxy MSISDN can correspond to a normal MSISDN approved, or subscribed to, for the central unit 30, at the first mobile radio network operator. In this way no further contractual agreements between the central unit 30 and the first mobile radio network operator are necessary than would be required for acquiring usual network access with a mobile radio device 10. It is also conceivable, however, that the proxy MSISDN as such is recognized by the first reloading unit 41 in order to facilitate a simplified crediting of the monetary amount value to a transfer account. However, it is important to point out that the proxy MSISDN is independent from the MSISDN assigned to the chipcard inserted into the mobile radio device 10. The proxy MSISDN is assigned to the central unit 30, and can be used for different reloading processes of different chipcards or user accounts to be loaded or reloaded. As an embodiment variant, the central unit 30 waits for confirmation from the first reloading unit 41 that the value code 13 is valid and is assigned to a monetary amount value, and/or for an initial confirmation of the monetary amount value on the transfer account, e.g. by the monetary institution, before ordering the loading or reloading of the chipcard or user account, as described further below, by a second reloading unit 40.

For loading or reloading the chipcard or user account, the central unit 30 transmits the monetary amount value and the identification of the chipcard or the user account to be loaded or reloaded to a second reloading unit 40 of a second mobile radio network operator, with whom the chipcard is approved for use of the mobile radio network. The communications channels 50/51/52 between the central unit 30 and the first, or respectively second, reloading unit 40/41 can comprise e.g. a telecommunications network, for instance a fixed network such as a LAN (Local Area Network) or WAN (Wide Area Network), the public switched telephone network (PSTN) and/or ISDN (Integrated Services Digital Network), the Internet or another communications network, in particular a mobile radio network. In particular, the central unit 30 can be connected to the first and second reloading units via the telecommunications network 50 and/or a direct data transmission network 51/52. The communication between the central unit and first and/or second reloading unit can take place e.g. via a TCP/IP interface 22 and/or Corba interface 25, an ATM module 23, a SMS and/or USSD gateway 24 by means of special short message, for instance SMS (Short Message Service), USSD (Unstructured Supplementary Services Data) messages or other technologies such as MExE (Mobile Execution Environment), via protocols such as GPRS (Generalized Packet Radio Service), WAP (Wireless Application Protocol) or via a service channel. The data transfer between the central unit 30 and the first reloading unit 41 and/or the second reloading unit 40 is initiated and carried out e.g. via software or hardware-implemented transfer modules of the central unit 30 as well as the reloading units 40/41. The second reloading unit 40 loads or reloads the chipcard in the mobile radio device 10 via the telecommunications network 50. The telecommunications network 50 includes at least one mobile radio network. The mobile radio network can be e.g. a GSM, a UMTS or another mobile radio network 50. The communication over the mobile radio network 50 takes place, for example, by means of special short messages, for example SMS (Short Message Service), USSD (Unstructured Supplementary Services Data) messages or other technologies such as MExE (Mobile Execution Environment), via protocols such as GPRS (Generalized Packet Radio Service), WAP (Wireless Application Protocol) or via a service channel. In an embodiment variant, the central unit includes a computational module with which it converts the monetary amount value into the home currency of the second mobile radio network operator before it transmits the monetary amount value with the identification of the chipcard or the user account to the reloading unit 40 of the home mobile radio network operator (i.e. of the mobile radio network operator with whom the mobile radio device 10 is approved for use of the mobile radio network 50). The central unit can determine the second reloading unit 40 of the second mobile radio network operator by means of a database, e.g. based on the MSISDN assigned to the chipcard. As an embodiment variant, it is also possible, however, that the second reloading unit 40 of the second mobile radio network operator is determined by means of a database, based e.g. on an identification number and/or code entered by the user of the chipcard.

It is important to note, that the first and second reload unit 41/42/43/44 and 40 usually do not have to be of the same type of system. The second reload unit 40 is normally the billing system of the second operator, which includes a database with all subscriber or user details and/or credit. The first reload units 41/42/43/44 include a sort of value card management system, as described above. However, the billing and value card systems can be integrated into one system, in which case the first and the second reload units 41/42/43/44 and 40 would be of the same type of system. As mentioned an advantage of the invention is, inter alia, that no special contractual agreements between the individual mobile radio network operators are necessary for mutual recognition of value cards 11 with value codes 13 from different mobile radio network operators. On the contrary, a single contractual agreement with a central unit 30 according to the invention or the operator thereof suffices for a mobile radio network operator. However the operator should have some kind of clearing procedures, since the operator of the first reload unit 41/42/43/44 sells the value card 11, i.e. gets revenue, while the operator of the second reload unit 40 will credit the subscriber's or user's more airtime, i.e. incur costs for the roaming.

Figure 2 and Figure 3 are each a block diagram showing schematically the architecture of a system for loading or reloading chipcards, used in mobile radio devices, or user accounts assigned to the chipcards with a credit for a monetary amount value, as is used in the state of the art. Figure 2 thereby comprises a system in which a user, via a central unit, can use only value codes of the reloading unit of the mobile radio network operator with whom the chipcard has been approved for mobile radio network access. If a mobile radio network operator would like to enable his users to use also value codes from other mobile radio network operators, then to do this in the state of the art a separate agreement must be negotiated (Figure 3) with each further mobile radio network operator 41/42/43/44 whose value code is supposed to be approved for loading or reloading.

## Claims

1. A method for loading and reloading of chipcards, used in mobile radio devices (10), or user accounts assigned to the chipcards with a credit for a monetary amount value, in which method a reloading unit transmits the credit to the chipcard or to the user account assigned to the chipcard and stored on a central customer database, whereas the chipcard is assigned to a call number of a user of the mobile radio network (50), a service number of a central unit (30) being called using a communications device, and by means of the communications device at least a code (13) of a prepaid value card (11) and an identification of the chipcard or the user account to be loaded or reloaded being transmitted, **characterised in**
**that** the central unit (30) determines, by means of a database that contains a stored list of mobile radio network operators, a first reloading unit (41) of a first mobile radio network operator who issued the prepaid value card (11),
**that** the central unit (30) transmits, via a first communications channel (50/51), the code (13) and a proxy MSISDN to the first reloading unit (41 ), and the first reloading unit (41) credits a monetary amount value, which is assigned to the code (13), to the central unit (30) by means of the proxy MSISDN, and
**that** the central unit (30) transmits, via a second communications channel (50/52), the monetary amount value and the identification of the chipcard or the user account to be loaded or reloaded to a second reloading unit (40) of a second mobile radio network operator, with whom the chipcard is approved for use of the mobile radio network (50), for loading or reloading the chipcard or the user account.

2. The method according to claim 1, **characterised in that** the MSISDN assigned to the chipcard is transmitted for identification of the mobile radio device (10).

3. The method according to one of the claims 1 or 2, **characterised in that** the mobile radio device (10) is used as communications device, in which mobile radio device (10) the chipcard is inserted.

4. The method according to one of the claims 1 to 3, **characterised in that** the central unit (30) converts the monetary amount value into the home currency of the second mobile radio network operator before it transmits the monetary amount value with the identification of the chipcard or the user account to the reloading unit (40) of the home mobile radio network operator.

5. The method according to one of the claims 1 to 4, **characterised in that** the second reloading unit (40) also sends the monetary amount value to a transfer account of the central unit (30).

6. The method according to one of the claims 1 to 5, **characterised in that** the central unit (30) establishes, by means of a database, the first reloading unit (41) of the first mobile radio network operator based on the code (13).

7. The method according to one of the claims 1 to 6, **characterised in that** the central unit (30) establishes, by means of a database, the first reloading unit (41) of the first mobile radio network operator based on an identification number entered by the user of the chipcard.

8. The method according to one of the claims 1 to 7, **characterised in that** the chipcard is removably connected to the mobile radio device (10) via an interface having contacts.

9. The method according to one of the claims 1 to 8, **characterised in that** the chipcard is integrated into the mobile radio device (10) as fixed component.

10. A system for loading or reloading chipcards, used in mobile radio devices (10), or user accounts assigned to the chipcards and stored on a central customer database with a credit for a monetary amount value, which system comprises at least two reloading units (40/41), connected to a mobile radio network (50), and at least one mobile radio device (10) with a chipcard that is assigned to a call number of a user of the mobile radio network (50), the reloading units (40/41) containing codes (13) of a particular mobile radio network operator which are stored with an assigned credit in a database connected to the reloading units (40/41), **characterised in**
**that** the system includes a central unit (30) connected to the mobile radio network (50), which central unit (30) is connected to a database that contains a stored list of mobile radio network operators, by means of which list the mobile radio operator who issued a particular prepaid value card (11 ) with code (13) is able to be determined,
**that** the central unit (30) contains at least one proxy MSISDN for each mobile radio network operator for crediting of a monetary amount value, assigned to a code (13), via a reloading unit (40/41) of the respective mobile radio network operator,
**that** the central unit (30) comprises means for sending a code (13) and a respective proxy MSISDN to the first reloading unit of the first mobile radio network operator who issued the prepaid card of the code (13) via a first communication channel (50/51) and means for receiving the credited monetary amount value of the first mobile radio network operator, and
**that** the central unit includes means for transmitting an identification of the chipcard or the user account to be loaded or reloaded and of a monetary amount value assigned to the code (13) via a second communication channel (50/52) to a second reloading unit (40) of a second mobile radio network operator with whom the chipcard is approved for using the mobile radio network (50).

11. The system according to claim 10, **characterised in that** the identification of the mobile radio device (10) comprises the MSISDN assigned to the chipcard.

12. The system according to claim 10 or 11, **characterised in that** the communications device is the mobile radio device (10), in which mobile radio device (10) the chipcard is inserted.

13. The system according to one of the claims 10 to 12, **characterised in that** the central unit (30) includes means for converting the monetary amount value into the home currency of the second mobile radio network operator.

14. The system according to one of the claims 10 to 13, **characterised in that** the central unit (30) includes a transfer account for crediting the monetary amount value by means of the second reloading unit (40).

15. The system comprising means for carrying out all the steps of the method according to one of the claims 1 to 9, further **characterised in that** different mobile radio network operators of different countries having different reloading units (40/41) each with at least one database, in which database a list is stored of codes allocated to value cards (11) and an associated monetary amount value per code (13), and that the central unit (30) includes a proxy MSISDN for each mobile radio network operator and/or a corresponding subscription.

## Patentansprüche

1. Ansprüche zum Laden und Nachladen von in mobilen Funkgeräten (10) verwendeten Chipkarten oder den Chipkarten zugeordneten Teilnehmerkonten mit einem Guthaben in Höhe von einem Geldbetragwert, in welchem Verfahren eine Nachladungseinheit das Guthaben an die Chipkarte oder an das der Chipkarte zugeordnete und in einer zentralen Kundendatenbank gespeicherte Teilnehmerkonto übermittelt wird, wobei die Chipkarte mit einer Rufnummer eines Teilnehmers eines mobilen Funknetzwerkes (50) verknüpft ist, eine Dienstnummer einer zentralen Einheit (30) unter Verwendung einer Kommunikationseinrichtung angerufen wird, und wobei mittels der Kommunikationseinrichtung mindestens ein Code (13) einer Prepaid-Wertkarte (11) und eine Identifizierung der Chipkarte oder des Teilnehmerkontos, die zu laden oder nachzuladen sind, übermittelt werden, **dadurch gekennzeichnet,**
**dass** die Zentraleinheit (30) mittels einer Datenbank, die eine gespeicherte Liste von Mobil-Funknetzbetreibern enthält, eine erste Nachladeeinheit (41) eines ersten Mobil-Funknetzbetreibers ermittelt, der die Prepaid-Wertkarte (11) ausgestellt hat,
**dass** die Zentraleinheit (30) durch einen ersten Kommunikationskanal (50/51) einen Code (13) und eine Proxy MSISDN (Mobile Station ISDN Number) an die erste Nachladeeinheit (41) übermittelt, und dass die erste Nachladeeinheit (41) einen mit dem Code (13) verknüpften Geldbetragswert mittels einer Proxy MSISDN an die Zentraleinheit (30) gutschreibt, und
**dass** die Zentraleinheit (30) über einen zweiten Kommunikationskanal (50/52) den Geldbetragswert und die Identifizierung der Chipkarte oder des Teilnehmerkontos, die zu laden oder nachzuladen sind, zu einer zweiten Nachladeeinheit (40) eines zweiten Mobil-Funknetzbetreibers übermittelt, bei welchem die Chipkarte zur Anwendung des mobilen Funknetzwerkes (50) zum Laden oder Nachladen der Chipkarte oder des Teilnehmerkontos zugelassen ist.

2. Verfahren nach Anspruch 1, **dadurch gekennzeichnet, dass** die der Chipkarte zugeordnete MSISDN (Mobile Subscriber Integrated Services Digital Networknumber = Internationale Rufnummer eines Teilnehmers) zur Identifizierung des mobilen Funkgerätes (10) übermittelt wird.

3. Verfahren nach einem der Ansprüche 1 oder 2, **dadurch gekennzeichnet, dass** das mobile Funkgerät (10) als Kommunikationsgerät verwendet wird, in welchem mobilen Funkgerät (10) die Chipkarte eingeführt wird. (

4. Verfahren nach einem der Ansprüche 1 bis 3, **dadurch gekennzeichnet, dass** die Zentraleinheit (30) den Geldbetragswert in die Landeswährung des zweiten Mobil-Funknetzbetreibers konvertiert, bevor sie den Geldbetragswert zusammen mit der Identifizierung der Chipkarte oder des Teilnehmerkontos an die Nachladeeinheit (40) des Mobil-Heimfunknetzbetreibers übermittelt.

5. Verfahren nach einem der Ansprüche 1 bis 4, **dadurch gekennzeichnet, dass** die zweite Nachladeeinheit (40) somit den Geldbetragswert zu einem Transferkonto der zentralen Einheit (30) sendet.

6. Verfahren nach einem der Ansprüche 1 bis 5, **dadurch gekennzeichnet, dass** die Zentraleinheit (30) basierend auf dem Code (13) mittels einer Datenbank die erste Nachladeeinheit (41) des ersten Mobil-Funknetzbetreibers einrichtet.

7. Verfahren nach einem der Ansprüche 1 bis 5, **dadurch gekennzeichnet, dass** die Zentraleinheit (30) basierend auf einer vom Teilnehmer der Chipkarte eingegebenen Identifizierungsnummer mittels einer Datenbank die erste Nachladeeinheit (41) des ersten Mobil-Funknetzbetreibers einrichtet.

8. Verfahren nach einem der Ansprüche 1 bis 7 , **dadurch gekennzeichnet, dass** die Chipkarte mit dem mobilen Funkgerät (10) durch eine kontaktbehaftete Schnittstelle lösbar verbunden ist.

9. Verfahren nach einem der Ansprüche 1 bis 8 , **dadurch gekennzeichnet, dass** die Chipkarte in dem mobilen Funkgerät (10) als festes Bauteil eingebaut ist.

10. System zum Laden oder Nachladen von in mobilen Funkgeräten (10) verwendeten Chipkarten oder von den Chipkarten zugeordneten und in einer zentralen Kundendatenbank gespeicherten Teilnehmerkonten mit einem Guthaben in Höhe eines Geldbetragswerts, welcher System mindestens zwei mit einem Mobil-Funknetz (50) verbundene Nachladeeinheiten (40/41), und mindestens ein mobile Funkgerät (10) mit einer Chipkarte des Mobil-Funknetzes (50), die mit einer Rufnummer eines Teilnehmers verknüpft ist, umfasst, wobei die Nachladeeinheit (40/41) Codes (13) eines besonderen Mobil-Funknetzbetreibers enthält, die mit einem zugehörigen Guthaben in einer mit den Nachladeeinheiten (40/41) verbundenen Datenbank gespeichert sind, **dadurch gekennzeichnet,**
**dass** das System eine mit dem Mobil-Funknetz (50) verbundene Nachladeeinheit (30) umfasst, Nachladeeinheit (30), die mit einer Datenbank verbunden ist, die eine gespeicherte Liste von Mobil-Funknetzbetreibern enthält, mit welcher Liste der Mobil-Funknetzbetreiber, der eine spezielle Prepaid-Wertkarte (11) mit einem Code (13) ausgestellt hat, ermittelt werden kann,
**dass** die Zentraleinheit (30) mindestens eine Proxy MSISDN (Mobile Subscriber Integrated Services Digital Networknumber = Internationale Rufnummer eines Teilnehmers) für jeden Mobil-Funknetzbetreiber zum Gutschreiben eines einem Code (13) zugeordneten Geldbetragswertes über eine Nachladeeinheit (40/41) des jeweiligen Mobil-Funknetzbetreibers umfasst,
**dass** die Zentraleinheit (30) Mittel zur Sendung eines Codes (13) und einer jeweiligen Proxy MSISDN (Mobile Subscriber Integrated Services Digital Networknumber = Internationale Rufnummer eines Teilnehmers) an die erste Nachladeeinheit des ersten Mobil-Funknetzbetreibers, der die Prepaid-Karte des Codes (13) ausgestellt hat, durch einen ersten Kommunikationskanal (50/51) und Mittel zum Empfang des gutgeschriebenen Geldbetragswertes des ersten Mobil-Funknetzbetreibers umfasst, und
**dass** die Zentraleinheit (30) Mittel zur Übertragung einer Identifizierung der Chipkarte oder des Teilnehmerkontos, die zu laden oder nachzuladen sind, und eines dem Code (13) zugeordneten Geldbetragswerts über einen zweiten Kommunikationskanal (50/52) an die zweite Nachladeeinheit (40) eines Mobil-Funknetzbetreibers, bei welchem die Chipkarte zur Benutzung des Mobil-Funknetzes (50) zugelassen ist.

11. System nach Anspruch 10, **dadurch gekennzeichnet, dass** die Identifizierung des mobilen Funkgerätes (10) die der Chipkarte zugeordnete MSISDN (Mobile Subscriber Integrated Services Digital Networknumber = Internationale Rufnummer eines Teilnehmers) umfasst.

12. System nach Anspruch 10 oder 11, **dadurch gekennzeichnet, dass** das Kommunikationsgerät das mobile Funkgerät (10) ist, in welchem mobilen Funkgerät (10)die Chipkarte eingeführt ist.

13. System nach einem der Ansprüche 10 bis 12, **dadurch gekennzeichnet, dass** die Zentraleinheit (30) Mittel zur Konvertierung des Geldbetragswerts in die Landeswährung des zweiten Mobil-Funknetzbetreibers umfasst.

14. System nach einem der Ansprüche 10 bis 13, **dadurch gekennzeichnet, dass** die Zentraleinheit (30) ein Transferkonto zum Gutschreiben des Geldbetragswerts mittels der zweiten Nachladeeinheit (40) umfasst.

15. System mit Mitteln zur Durchführung aller Verfahrensschritte nach einem der Ansprüche 1 bis 9, zudem **dadurch gekennzeichnet, dass** unterschiedliche Mobil-Funknetzbetreiber von verschiedenen Ländern über unterschiedliche Nachladeeinheiten (40/41)jeweils mit mindestens einer Datenbank verfügen, in welcher Datenbank eine Liste von den Wertkarten (11) zugeordneten Codes(13) und einen zugehörigen Geldbetragswert pro Code gespeichert sind, und dass die Zentraleinheit (30) eine Proxy MSISDN für jeden Mobil-Funknetzbetreiber und/oder ein entsprechendes Abonnement umfasst.

## Revendications

1. Procédé pour le chargement et rechargement de cartes à puce utilisées dans des dispositifs mobiles radio ou de comptes utilisateurs associés aux cartes à puce d'un crédit pour une valeur monétaire, procédé dans lequel une unité de rechargement transmet le crédit à la carte à puce ou au compte utilisateur associé à la carte à puce et stocké dans une base centrale de données clients, de sorte que la carte à puce est associée à un numéro de téléphone d'un utilisateur du réseau mobile (50), un numéro de service d'une unité centrale (30) étant composé en utilisant un dispositif de communication et au moyen du dispositif de communication, au moins un code (13) d'une carte de valeur prépayée et une identification de la carte à puce ou du compte utilisateur à charger ou recharger étant transmis, **caractérisé en**
**ce que** l'unité centrale (30) détermine au moyen d'une base de données qui contient une liste mémorisée des opérateurs de réseau radio mobile une première unité de rechargement (41) d'un premier opérateur de réseau radio mobile qui a édité la carte de valeur prépayée (11),
**en ce que** l'unité centrale (30) transmet par un premier canal de communication (50/51) le code (13) et un Proxy (serveur mandataire MSISDN (Mobile Subscriber Integrated Services Digital Networknumber = Numéro de téléphone international de l'abonné), à la première unité de rechargement (41) et la première unité de rechargement (41) crédite une valeur d'un montant monétaire qui est associée au code (13) à l'unité centrale (30) au moyen du Proxy MSISDN, et
**en ce que** l'unité centrale (30) transmet par un second canal de communication (50/52) la valeur de montant monétaire et l'identification de la carte à puce ou du compte utilisateur à charger ou à recharger à une seconde unité de rechargement (40) d'un second opérateur de réseau radio mobile, auprès duquel la carte à puce est autorisée pour l'utilisation du réseau radio mobile (50) pour charger ou recharger la carte à puce ou le compte utilisateur.

2. Procédé selon la revendication 1, **caractérisé en ce que** le MSISDN associé à la carte à puce est transmis pour l'identification du dispositif radio mobile (10).

3. Procédé selon l'une des revendications 1 ou 2, **caractérisé en ce que** le dispositif radio mobile (10) est utilisé comme dispositif de communication dispositif radio mobile (10) dans lequel la carte à puce est insérée,

4. Procédé selon l'une des revendications 1 à 3, **caractérisé en ce que** l'unité centrale (30) convertit la valeur du montant monétaire en monnaie domestique du second opérateur de réseau radio mobile avant qu'il ne transmette la valeur de montant monétaire avec l'identification de la carte à puce ou du compte utilisateur à l'unité de rechargement (40) de l'opérateur du réseau mère radio mobile.

5. Procédé selon l'une des revendications 1 à 4, **caractérisé en ce que** la seconde unité de rechargement (40) envoie ainsi la valeur du montant monétaire à un compte de transfert de l'unité centrale (30).

6. Procédé selon l'une des revendications 1 à 5, **caractérisé en ce que** l'unité centrale (30) établit au moyen d'une base de données, la première unité de rechargement (41) du premier opérateur de réseau radio mobile basé sur le code (13).

7. Procédé selon l'une des revendications 1 à 6, **caractérisé en ce que** l'unité centrale (30) établit au moyen d'une base de données, la première unité de rechargement (41) du premier opérateur de réseau radio mobile basé sur un numéro d'identification entré par l'utilisateur de la carte à puce.

8. Procédé selon l'une des revendications 1 à 7, **caractérisé en ce que** la carte à puce est connectée de manière amovible au dispositif radio mobile (10) par une interface à contact

9. Procédé selon l'une des revendications 1 à 8, **caractérisé en ce que** la carte à puce est intégrée au dispositif radio mobile (10) comme composant fixe.

10. Système pour le chargement ou le rechargement de cartes à puce, utilisé dans des dispositifs radio mobiles (10) ou de comptes utilisateurs associés aux cartes à puce et stockés sur une base centrale de données clients, d'un crédit pour une valeur de montant monétaire, lequel système comprend au moins deux unités de rechargement (40/41), connectées à un réseau radio mobile (50), et au moins un dispositif radio mobile (10) avec une carte à puce qui est associée à un numéro d'appel d'utilisateur du réseau radio mobile (50), les unités de rechargement (40/41) contenant des codes (13) d'un opérateur de réseau radio mobile particulier, lesquels sont stockés avec un crédit associé dans une base de données connectée aux unités de rechargement (40/41) **caractérisé**
**en ce que** le système comprend une unité centrale (30) connectée au réseau radio mobile (50), unité centrale (30) qui est connectée à une base de donnée qui contient une liste mémorisée d'opérateurs de réseau radio mobile, liste qui permet de déterminer par un code (13) l'opérateur de réseau radio mobile qui édite une carte de valeur prépayée particulière (11),
**en ce que** l'unité centrale (30) comprend au moins un Proxy MSISDN pour chaque opérateur de réseau radio mobile associé à un code (13) pour créditer une valeur de montant monétaire par une unité de rechargement (40/41) de l'opérateur de réseau radio mobile respectif.
**en ce que** l'unité centrale (30) comprend des moyens pour l'envoi d'un code (13) et un Proxy MSISDN respectif à la première unité de rechargement du premier opérateur de réseau radio mobile qui a édité la carte prépayé du code (13) par un premier canal de communication (50/51), et des moyens pour recevoir la valeur du montant monétaire crédité du premier opérateur de réseau radio mobile et
**en ce que** l'unité centrale comprend des moyens pour la transmission d'une identification de la carte à puce ou du compte utilisateur à charger ou recharger et de la valeur du montant monétaire associée au code (13) par le biais d'un second canal de communication (50/52) à une seconde unité de rechargement (40) d'un second opérateur de réseau radio mobile, lequel donne l'autorisation d'utiliser la carte à puce dans le réseau radio mobile (50).

11. Système selon la revendication 10, **caractérisé en ce que** l'identification du dispositif radio mobile (10) comprend le MSISDN associé à la carte à puce.

12. Système selon la revendication 10 ou 11, **caractérisé en ce que** le dispositif de communication est le dispositif radio mobile (10), dispositif radio mobile (10) dans lequel est insérée la carte à puce.

13. Système selon l'une des revendications 10 à 12, **caractérisé en ce que** l'unité centrale (30) comprend des moyens pour la conversion de la valeur du montant monétaire dans la devise domestique du second opérateur de réseau radio mobile.

14. Système selon l'une des revendications 10 à 13, **caractérisé en ce que** l'unité centrale (30) comprend un compte de transfert pour créditer la valeur du montant monétaire au moyen de la seconde unité de rechargement (40).

15. Système comprenant des moyens pour exécuter toutes les étapes du procédé selon l'une des revendications 1 à 9, en outre **caractérisé en ce que** les différents opérateurs de réseau radio mobile de différents pays ayant des unités de rechargement différentes (40/41), chacune avec au moins une base de données, base de données dans laquelle est stockée une liste de codes associés à des cartes de valeur (11) et une valeur de montant monétaire associée à chaque code (13) et **en ce que** l'unité centrale (30) comprend un Proxy MSISDN pour chaque opérateur de réseau radio mobile et/ou un abonnement correspondant.
